Europäisches Patentamt

European Patent Office

Office européen des brevets

(11) Publication number: **0 007 155**
**A1**

# EUROPEAN PATENT APPLICATION

(21) Application number: **79300628.9**

(22) Date of filing: **17.04.79**

(51) Int. Cl.³: **G 01 F 23/28**
**G 01 F 1/28, G 01 L 9/00**
**G 01 P 5/04, G 08 B 5/36**

(30) Priority: **19.04.78 NZ 187017**

(43) Date of publication of application:
**23.01.80 Bulletin 80 2**

(84) Designated Contracting States:
**BE CH DE FR GB IT LU NL SE**

(71) Applicant: **SEA PROBE ELECTRONICS PTY. LIMITED**
**8 Bailey Crescent**
**Southport Queensland 4215(AU)**

(72) Inventor: **Stobbart, Brian Craig**
**30, Bordeaux Parade Mermaid Waters Estate**
**Mermaid Beach Queensland 4218(AU)**

(74) Representative: **Kirk, Geoffrey Thomas et al,**
**BATCHELLOR, KIRK & EYLES 2, PEAR TREE COURT**
**Farringdon Road**
**London EC1R 0DS(GB)**

(54) **Monitoring apparatus.**

(57) Monitoring apparatus particularly suitable for sensing liquid level comprises a housing (11) of light transmitting material with a monitoring lens (17), a directional light source (18) in the housing arranged so that light emitted is directed to the lens (17), and a monitorable light sensitive device (12) mounted in the housing (11) at a position from the light path between the source (18) and the lens (17). The light intensity monitored by the sensitive device differs when the device is in air to when it is in a liquid.

Fig.1.

EP 0 007 155 A1

Croydon Printing Company Ltd.

# MONITORING APPARATUS

THIS INVENTION relates to monitoring apparatus.

Applications for monitoring apparatus, especially for level sensing, are numerous and todate such sensing has been accomplished mainly by mechanically actuated conducting devices or by observation. For example, float devices have been widely used for indicating liquid levels within tanks as has observation which can be in an indirect form, such as by dipping a dip stick to check say oil level in a motor. Such basic methods have been widely used and have not been superseded todate because of the lack of suitable alternatives capable of operating reliably and being inexpensive to install. However, there have been attempts to provide electronic sensing means whereby electrically conductive probes are arranged to activate an electronic circuit to indicate the presence of the medium to be monitored. The application of such presently available electronic devices is extremely limited depending upon the medium to be monitored. For example, it is difficult to monitor acids and alkalies or electrically conductive liquids.

The present invention has been devised to provide monitoring apparatus which will overcome the disadvantages of the presently available apparatus and which will be reliable and efficient in operation. Other objects and advantages of the invention will become apparent from the following description.

With the foregoing and other objects in view, this invention resides broadly in monitoring apparatus including:

a housing formed of light transmitting material;

a monitoring lens on said housing;

a directional light source mounted within said housing so as to direct the light emitted therefrom towards said monitoring lens;

a monitorable light sensitive device mounted in said housing and disposed remote from the light path between said light source and said lens.

In order that the invention may be more readily understood and put into practical effect, reference will now be made to the accompanying drawings which illustrate the invention and wherein:-

Fig. 1 illustrates a preferred form of monitoring apparatus made in accordance with the present invention;

Fig. 2 illustrates the embodiment of Fig. 1 immersed in a liquid;

Fig. 3 is a typical switching circuit including the monitoring apparatus of Fig. 1;

Fig. 4 is a side view of a practical embodiment of the invention;

Fig. 5 illustrates diagrammatically a further embodiment of the invention applied to monitor the sump oil level of a motor; and

Fig. 6 illustrates the application of the invention to a flow meter.

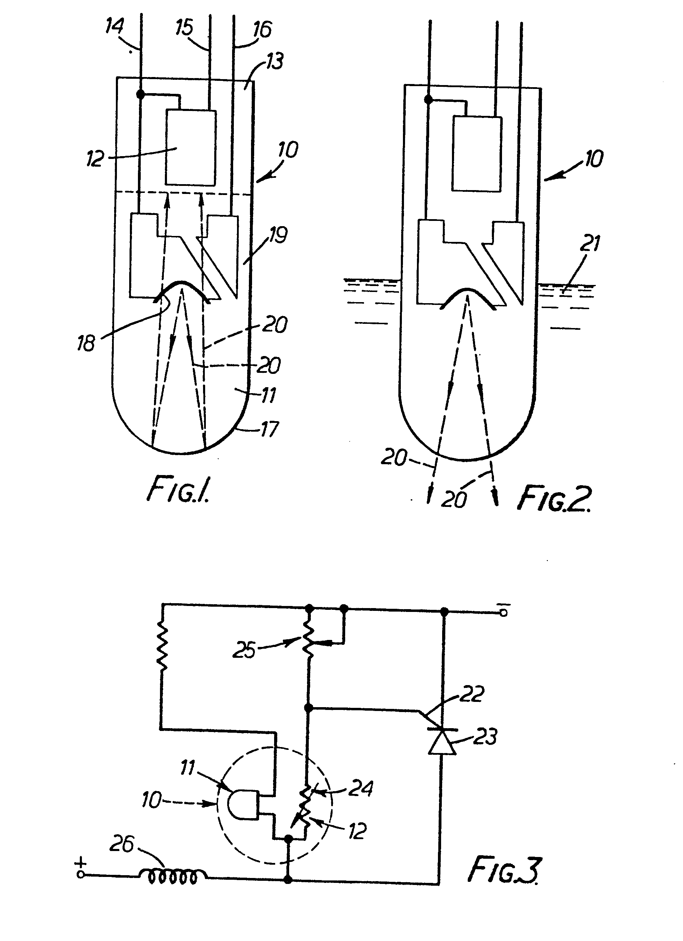

As shown in Fig. 1, the monitoring apparatus 10 comprises a light emitting diode 11 behind which a cadmium sulphide cell 12 is encapsulated in a translucent epoxy material 13 to form a simple integral unit which, in this embodiment, is provided with three connection leads, one lead 14 being a common connection to the cadmium sulphide cell 12 and the light emitting diode 11 and the remaining two leads, 15 and 16, being direct connections to the cadmium sulphide cell and the light emitting diode, respectively.

Conventionally, light emitting diodes are provided with a substantially part-spherical end cap 17 which is utilised in the present application as a monitoring lens and a substantially centrally disposed directional light source 18 directed towards said end cap 17, and such diodes are used mainly for the purposes of providing a low current drain light source. The light rays 20 from the light source 18 are normally somewhat diffused throughout the encapsulated housing 19 by back reflection of the light rays 20 especially from the outer surface of the end cap 17. However, when utilised in the monitoring apparatus of the present invention and the diode is immersed in a liquid 21 the reflection from the outer surface of the rounded end cap 17 is greatly reduced so that the light falling thereon from the light source 18 passes straight through the encapsulating material into the liquid 21 and the light intensity internally of the light emitting diode 11 behind the light source 18 is greatly reduced. In the preferred form of monitoring apparatus of the present invention, the light intensity behind the light source 18 is monitored by a cadmium sulphide cell 12 which exhibits a decrease in electrical resistance with increase in light intensity falling thereon. Of course, other light sensitive devices could be used in place of the cadmium sulphide cell 12 - for example, a photo transistor or a fibre optic tube for remote direct visual monitoring.

Fig. 3 illustrates the basic switching circuit for the monitoring apparatus and arranged in combination as a low liquid level indicator. As shown, the gate 22 of a silicon controlled rectifier 23 is connected between balance resistors comprising at one side, the cadmium sulphide cell 24 of the monitoring apparatus 10, and at the other side the resistor 25. When these resistors are balanced the normally open circuit condition of the silicon controlled rectifier 23 switches to the conducting state. This occurs when the liquid level falls and the normally immersed lens is exposed, causing back reflection from the light source 18 within the light emitting diode 11 and a resultant decrease in the resistance of the cadmium sulphide cell 12 due to the increased light intensity impinging thereon. The resistance of the cell 12 ien becomes equal to the resistance of the resistor 25.

When the silicon controlled rectifier is made conductive by the appropriate voltage at the gate 22, the load, suitably a relay 26, is activated to provide the appropriate alarm. Of course, the relay could provide a visual or audible alarm or it could be arranged to activate a pump to replenish the liquid.

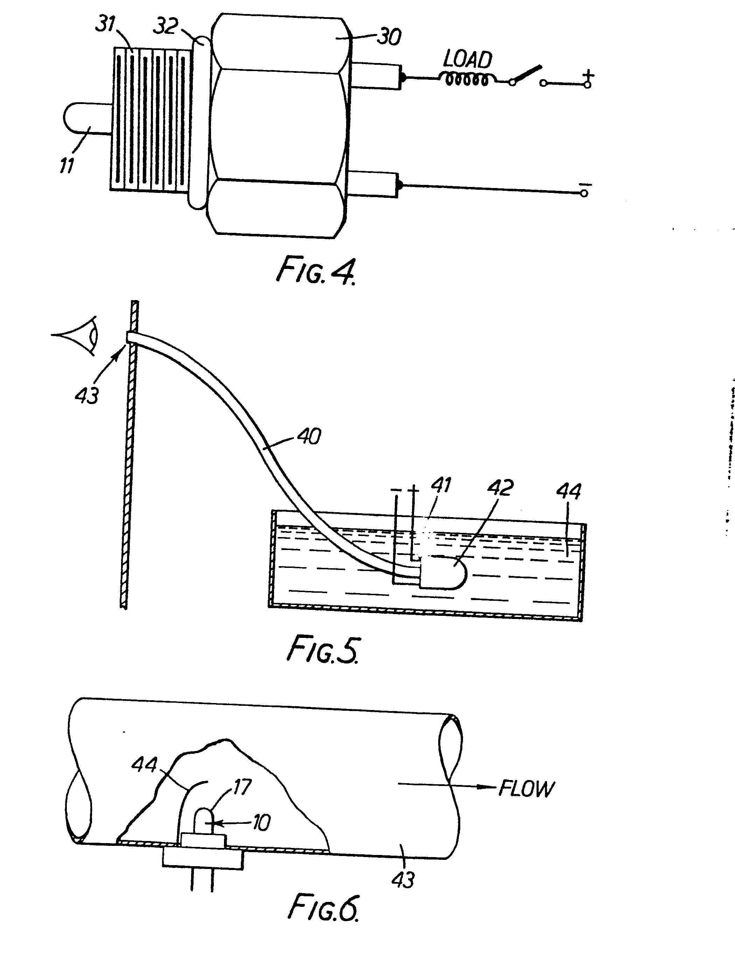

As shown, the resistor 25 is a variable resistor so that the circuit can be calibrated for particular operating conditions, especially ambient light conditions and then encapsulated. Fig. 4 illustrates a typical

practical embodiment of the invention which comprises a spanner engageable hexagonal body portion 30 integral with a threaded connector portion 31 and adapted to be connected say into the side wall of a liquid container so that the exposed light emitting diode 11 projects into the tank at the monitoring level. An O-ring seal 32 is provided about the connector portion 31 and the connections for the load extend rearwardly from the hexagonal body portion 13. The switching circuitry illustrated in Fig. 3 is encapsulated in epoxy resin within the body portion 30 and as previously mentioned, the resistor 25 is preset prior to encapsulation for the particular operating conditions.

In a modification of the basic circuit illustrated in Fig. 3, the resistor 25 may be replaced by the cadmium sulphide cell of another monitoring device whereby the balance between the resistors 24 and 25 would not be affected by ambient light conditions. Furthermore, the cadmium sulphide cell 24 and the balancing resistance 25 may be interchanged depending upon the mode of operation of the monitoring apparatus 10. For example, they would be interchanged if the apparatus was to be utilised to monitor a rising level. In such an installation the silicon controlled rectifier would be made conductive as a result of an increase in the resistivity of the cadmium sulphide cell.

In the embodiment illustrated in Fig. 5, a fibre optic tube 40 extends from the back face 41 of the light emitting diode 42 to a remote location 43 visible by an observer. For example, the light emitting diode could be supported in the sump 44 of a motor at the desired oil level so that as soon as the oil level fell below a desired level the change in light intensity at the remote end 43 of the fibre optic tube 40 would be visible immediately by the observer.

A feature of the present invention is its ability to be used in most types of environment. It may be located directly in the medium to be sensed whether, for example, that medium be hot or cold or acid or alkali. No direct electrical connection is made with the medium being sensed. Furthermore, the apparatus of the present invention may be utilised to monitor sludge levels in a liquid medium. In such an installation, the intensity of light falling upon the light sensitive device would increase as the device passed into the sludge due to back reflection caused by the lens 17 being disposed in the sludge instead of the translucent liquid medium.

The monitoring apparatus 10 may, say, inform a control device if liquid is or is not at the level of the diode and the control device may be activated accordingly. A plurality of such monitoring devices may be spaced vertically in a container to be monitored so that the level of the liquid or whatever can be determined within reasonably close tolerances, the accuracy of course being dependent upon the number of vertically spaced diodes utilised.

The apparatus 10 could be utilised to maintain a constant check on the oil level in a sump or on the water level in the bilge of a boat or for example the level of grain in a silo. If utilised in an application where the level of opaque liquid such as milk is to be maintained the aforementioned internal reflection from the rounded end of the clear encapsulating material will, when in contact with the milk, be magnified so that a greater intensity of light will be reflected back to the photo transistor. This change could be monitored so that the device according to the present invention would be able to determine if the milk was at the level of the photo transistor or therebelow.

In an alternate form of the invention which may be suitable for use in high temperature applications the monitoring apparatus is in the form of a clear glass housing having a parabolic lens and there are provided a pair of spaced fibre optic tubes arranged in such manner that light is conveyed to said lens by one fibre optic tube and is reflected by the parabolic lens back into the other fibre optic tube. The light transmitting diode or other suitable light source and the photo transistor or other suitable light sensitive device are mounted remotely from the sensed medium at respective ends of the fibre optic tubes in a cooler atmosphere where their operation will not be adversely affected.

Furthermore, the back reflection operation of the monitoring device of the present invention may be utilised to adapt the invention for reliable monitoring in mediums other than liquid mediums. For example, as illustrated in Fig. 6, the monitoring apparatus 10 could be adapted to monitor the velocity of a flow stream 43 either air or liquid. In the illustrated embodiment the apparatus 10 is supported in an air flow stream, together with a flexible reed 44 which is mounted so as to bend with the air flow to extend across the lens 17 so that the proximity of the reed 44 to the lens 17 is increased with an increase in air flow velocity. The back surface of the reed is coated with a reflecting material whereby the intensity of reflection and thus resistance of the cadmium sulphide cell varies with the proximity of the reed 44. This variation in resistance may, through calibrated circuitry, provide a read-out of the air flow velocity in the air flow stream 43.

In a similar manner, the invention may be used to monitor changes in pressure by providing a diaphragm which moves towards or away from the lens of the monitoring apparatus with variations in the pressure to be monitored. The monitoring apparatus 10 may be used as a smoke detector by back reflection from surrounding smoke. Furthermore, sensitivity of the invention is such that it may be utilised to monitor the presence of small amounts of liquid such as a liquid film. In such an application, the monitoring apparatus is placed with the lens adjacent the surface on which the liquid film to be monitored will form so that as soon as the liquid film does form it will contact the lens to cause the change in light intensity within the apparatus. Of course, it can be used to monitor granular material and the like as well as liquids.

Of course, the above has been given only by way of illustrative example of the invention and many modifications can be made thereto without departing from the spirit of the invention. All such modifications and variations as would be apparent to persons skilled in the art are deemed to fall within the broad scope and ambit of the invention as is defined in the appended claims.

CLAIMS

1.      Monitoring apparatus including:

      a housing formed of light transmitting material;

      a monitoring lens on said housing;

      a directional light source mounted within said housing so as to direct the light emitted therefrom towards said monitoring lens;

      a monitorable light sensitive device mounted in said housing and disposed remote from the light path between said light source and said lens.

2.      Monitoring apparatus according to Claim 1, wherein said directional light source mounted within said housing is constituted by a light emitting diode of the type having a substantially cylindrical body formed of transparent material and rounded at the normal light emitting end with the electrical connections thereto extending from the end of said housing opposite to said rounded end, and wherein said rounded end constitutes said lens.

3.      Monitoring apparatus according to Claim 2, wherein said monitorable light sensitive device is encapsulated in a translucent material with said electrical connections at said opposite end of said light emitting diode.

4.      Monitoring apparatus according to Claim 3, wherein said monitorable light sensitive device is a cadmium sulphide cell.

5.      Monitoring apparatus according to Claim 3, wherein said monitorable light sensitive device is a photo transistor.

6.      Monitoring apparatus according to Claim 4, wherein said encapsulating material is an epoxy resin.

7.      Monitoring apparatus according to Claim 3, wherein said monitoring apparatus is supported in a hollow body including an outer spanner-engageable portion and an inner threaded portion, and wherein said light emitting diode projects inwardly beyond said threaded inner portion.

8.      Monitoring apparatus according to Claim 7, wherein there is provided a switching circuit encapsulated within said hollow body and provided with a pair of external connections extending outwardly from said spanner engageable outer portion and said switching circuit being adapted to be actuated by the change in condition of said light sensitive device.

9.      Monitoring apparatus according to Claim 8, wherein said light sensitive device changes electrical resistance with change of light entensity thereon and said switching circuit is actuated by a change in resistance of said light sensitive device.

10.     Monitoring apparatus according to Claim 8, wherein said sensitive device is a cadmium sulphide cell.

11.     Monitoring apparatus according to Claim 8, wherein said sensitive device is a photo transistor.

12.     Monitoring apparatus according to Claim 3, wherein said light sensitive device includes one end of a fibre optic tube.

0007155

1/2

FIG.1.

FIG.2.

FIG.3.

2/2

FIG. 4.

FIG. 5.

FIG. 6.

0007155

## European Patent Office

# EUROPEAN SEARCH REPORT

Application number

EP 79 30 0628

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | <u>FR - A - 1 585 979</u> (TELEFUNKEN PATENTVERWERTUNGSGESELLSCHAFT)<br>* Figures 1-4; page 2 *<br><br>-- | 1,3,5,<br>11 | G 01 F 23/28<br> 1/28<br>.G 01 L 9/00<br>G 01 P 5/04<br>G 08 B 5/36 |
| | <u>US - A - 2 976 763</u> (M.F. McKEAG)<br>* Figures 1,5 *<br><br>-- | 1,3 | |
| | <u>FR - A - 2 249 316</u> (NEU ELEKTRIK . A.G.)<br>* Figure 5 *<br><br>-- | 1,3 | **TECHNICAL FIELDS SEARCHED (Int.Cl.³)**<br><br>G 01 F 23/28<br> 1/28<br>G 01 L 9/00<br> 11/00<br>G 01 P 5/04 |
| | <u>FR - A - 2 148 650</u> (H. HELMUT)<br>* Figures 1-6; page 4, lines 5-9 *<br><br>-- | 1,7 | |
| | <u>FR - A - 2 319 118</u> (HECTRONIC A.G.)<br>* Figures 1-4 *<br><br>-- | 1 | |
| | <u>US - A - 4 038 650</u> (M. EVANS et al.)<br>* Figures 1-4; abstract *<br><br>---- | 1,5,,<br>7-9,<br>11,12 | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| The present search report has been drawn up for all claims | | |
|---|---|---|
| Place of search<br>The Hague | Date of completion of the search<br>03-07-1979 | Examiner<br>THIBO |

EPO Form 1503.1 06.78